(19) Europäisches Patentamt
European Patent Office
Office européen des brevets

(11) Publication number: 0 152 463 B1

(12) **EUROPEAN PATENT SPECIFICATION**

(45) Date of publication of patent specification: **23.05.90**

(51) Int. Cl.$^5$: **C 01 F 7/46**

(21) Application number: **84903208.1**

(22) Date of filing: **01.08.84**

(86) International application number: **PCT/US84/01214**

(87) International publication number: **WO 85/00799 28.02.85 Gazette 85/05**

# (54) PRODUCTION OF HIGH PURITY ALUMINA.

(30) Priority: **03.08.83 US 519799**

(43) Date of publication of application: **28.08.85 Bulletin 85/35**

(45) Publication of the grant of the patent: **23.05.90 Bulletin 90/21**

(84) Designated Contracting States: **BE FR**

(56) References cited:
**US-A-1 519 880**
**US-A-4 056 363**
**US-A-4 222 989**
**US-A-4 239 735**
**US-A-4 297 327**

**No relevant documents have been disclosed.**

(73) Proprietor: **Condea Chemie GmbH**
**Fritz-Staiger-Strasse 15**
**D-2212 Brunsbüttel 1 (DE)**

(72) Inventor: **CAMBRIDGE, Edward, L.**
**8160 E. Ridgewood Drive**
**Tucson, AZ 85715 (US)**
Inventor: **LOUTFY, Raouf, O.**
**4660 N. Via Madre**
**Tucson, AZ 85749 (US)**
Inventor: **WITHERS, James, C.**
**3770 Larrea Lane**
**Tucson, AZ 85715 (US)**
Inventor: **BLAKE, Daniel, M.**
**4521 N. Via Madre**
**Tucson, AZ 85749 (US)**

(74) Representative: **Martin, Jean-Jacques et al**
**Cabinet REGIMBEAU 26, Avenue Kléber**
**F-75116 Paris (FR)**

**EP 0 152 463 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

The invention herein relates to the formation of alumina. More particularly it relates to the production of grades of high purity alumina suitable for use in ceramics, electronic components, synthetic sapphire, catalyst supports, translucent materials and other applications requiring alumina of low impurity contents.

### Background Art

Alumina is a raw material used in the production of many different types of ceramic materials, catalyst supports and refractories. Most commercial alumina is produced according to the "Bayer Process", a well known process for the production of alumina from bauxite. In the Bayer Process, bauxite is mixed with hot concentrated NaOH which dissolves some of the alumina, silica and other components of the bauxite. Most of the silica and other materials are reprecipitated and eliminated a solid waste referred to as "red mud". The dissolved alumina is then separated in solution from remaining solids and crystalized as alumina trihydrate, $\alpha$—$Al_2O_3 \cdot 3H_2O$ ("gibbsite"). Because it is formed in a sodium hydroxide environment, the gibbsite contains a significant amount (usually 0.3 to 0.4%) soda, $Na_2O$. (All percentages herein are by weight unless otherwise noted). In addition, the economics of the Bayer Process are such that significant amounts of other impurities such as silica are tolerated in the gibbsite product. A typical analysis of gibbsite from the Bayer Process is shown in Table 1. In accordance with the usual practice, impurities are expressed as the stable oxide form.

TABLE 1

| Impurities | Concentration, % |
|---|---|
| $Na_2O$ | 0.3 |
| CaO | 0.01 |
| ZnO | 0.004 |
| $SiO_2$ | 0.04 |
| $Fe_2O_3$ | 0.01 |

A number of other minor oxides are also present, in quantities of less than a few hundred ppm each. When the Bayer Process alumina trihydrate is calcined to produce anhydrous alumina, $Al_2O_3$, the impurities are concentrated by a factor of about 1.5.

While most of the commercial hydrated alumina is produced by the Bayer Process as described, it is possible to produce hydrated alumina by other methods. To the extent that such other methods result in the inclusion of unacceptably high levels of one or more impurities in the hydrated alumina, the purification process of the present invention wil be applicable to purification of those materials. For brevity herein, however, the process of this invention will be described in terms of the purification of Bayer Process-produced gibbsite, although it is to be understood that it is applicable to all impure hydrated aluminas.

For most alumina uses, such as electrolytic production of aluminum metal or formation of ordinary ceramic products and refractories, the gibbsite is entirely adequate even with these high levels of impurities present. For a number of applications, however, these impurity levels (particularly the high soda level) are unacceptable. These applications include products intended for use in the electronics industry, as supports for certain types of catalytic materials, as synthetic sapphire and as translucent bodies. Depending upon the particular application or product, maximum alumina impurity levels for materials such as soda, silica or iron oxide may be as low as 0.002%.

At present most commercially available aluminas of low soda ($Na_2O$) content are derived from the gibbsite made by the Bayer Process. Reduction in soda levels is accomplished by one of several methods that can attain, at best, minimum $Na_2O$ levels of 0.02—0.05%. The most comon type of method involves a partial conversion of gibbsite to an active form of alumina which is treated with an aqueous solution of a chloride source such as ammonium chloride weak hydrochloric acid or aluminum chloride. After removal of the liquid phase the resulting solid containing adsorbed chlorides is calcined at temperatures greater than 1000°C to yield alumina with soda contents of 0.02—0.09%. This type of process is described, for instance, in German Offen. 2,816,194; German Offen. 1,276,017 and Canadian Patent 795,706. These methods are restricted to production of alumina suitable for applications which can tolerate more than 0.02% $Na_2O$.

A different method of soda reduction involves calcination of gibbsite in the presence of a substance containing at least 10% silica at 1260°C. The soda is selectively concentrated in the silica which is then separated by screening from the alumina. The product alumina has a soda level of 0.02%, and also has an elevated quantity of $SiO_2$ of about 0.02%. See U.S. Patent 3,106,452.

Various processes using hydrochloric acid were proposed to produce pure alumina. In US patent 1 519 880 a process is described where clay is treated with hydrochloric acid solution to dissolve aluminium chloride. The solution is then filtrated and submitted to concentration by evaporation; concentrated solution is cooled to obtain aluminium trichloride hexahydrate which is separated from the mother liquor. Aluminium trichloride hexahydrate is submitted to a roasting so as to produce alumina of rather high purity. Due to the high cost of evaporation, this process is hardly profitable.

In another process described in US patent 4 222 989 a similar process is described where the crystallization of aluminium trichloride hexahydrate is cristallized by salting out the solution with hydrochloric acid coming from the thermal splitting. This change does not alter significantly the profitability of the process.

In the US patent 4 297 327 a process to produce aluminium chloride with a low content of magnesium from hydrochloric acid solution is described. This process also produces the crystals by salting out the above hydrochloric solution.

Disregarding the high energy consumption those processes did not provide alumina with high density and high thermal reactivity.

A process for recovering high purity alumina from waste streams from the hydrochloric acid etch of aluminum for electronics uses has been reported by Ruthner, et al in the published proceedings of the ICSOBA Third International Congress (Nice, 1973), pages 547—555. Very low levels of impurities are attained, but for economic reasons the method is applicable only when a highly pure waste stream of aqueous aluminum chloride is available. A number of other methods have been proposed that start with pure aluminum metal, organoaluminum compounds or alums. These in general start with a high cost material or generate products not recycleable to the process when calcined and are therefore not applicable to commercial production.

## Disclosure of Invention

We have now discovered a process by which alumina of varying degrees of enhanced purity can be easily obtained from hydrated forms of alumina. These may be gibbsite, bayerite, boehmite, diaspore or any other form of impure hydrated alumina. The invention herein is therefore a process for the reduction of the impurity content in alumina produced from a solid hydrated alumina containing a significant impurity content, which comprises:

a. reacting the solid hydrated alumina with 15—35% by weight hydrochloric acid to convert at least a portion of the hydrated alumina to solid aluminum chloride hexahydrates;

b. recovering the solid aluminum chloride hexahydrate and any unreacted solid hydrated alumina from the acid containing the dissolved impurities; and

c. calcining the solid materials so recovered to separate HCl and water and to form substantially anhydrous amorphous or crystalline alumina having a lower impurity content than the hydrated alumina.

The process can produce aluminas of varying degrees of enhanced purity by varying the degree of conversion of hydrated alumina to aluminum chloride hexahydrate (ACH) in step (a) above and/or by recycle of recovered HCl and removal of a part of the impurity-containing recycle stream or impurity removal from at least a part of that recycle stream. In one embodiment the hydrated alumina is fully converted to ACH and the impurity level is reduced to a minimum.

In other embodiments the solid materials recovered in step (b) may be redissolved and resolidified to achieve enhanced purity. This may, if desired, be repeated more than once.

Calcining in step (c) is preferably carried out in two stages, the first of which reduces the chloride and water levels in the alumina by up to 99%, while the second stage reduces it further to up to 99.99%.

## Modes for Carrying Out The Invention

The invention herein is a process for producing high purity alumina from relatively impure hydrated alumina, exemplified by Bayer Process gibbsite. In the present invention, the impurities are reduced to a very low level by converting the hydrated alumina to ACH in concentrated hydrochloric acid followed by calcination of the ACH to produce high purity essentially anhydrous alumina.

The principal reaction of the present invention is the conversion of the hydrated alumina to ACH in concentrated hydrochloric acid according to the following reaction:

$$Al_2O_3{\cdot}3H_2O\ [s] + 6HCl\ [1{+}g] + 6H_2O\ [1] \rightarrow 2AlCl_3{\cdot}6H_2O\ [s]$$

For this reaction the concentration of the hydrochloric acid will normally be in the range of 15—35% acid, preferably 20—30%. No additional water beyond that present as the concentrated acid solution is added. Additional concentrated acid and/or gaseous HCl can be added as the reaction progresses or as additional hydrated alumina is fed to the process, so that the process may be run as either a batch or a continuous operation. If the acid concentration is reduced much below about 15%, the reaction rate and yield of the ACH will be significantly reduced. For instance, using 10% hydrochloric acid produces essentially no solid $AlCl_3{\cdot}6H_2O$ after 24 hours.

The present reaction is believed to function to form the low impurity precursor for the final alumina

product by reactively dissolving both the hydrated alumina and the major portion of its included impurity metal oxides. The dissolved aluminous material then combines with the chloride portion of the hydrochloric acid to form ACH which in the defined range of acid concentration precipitates spontaneously as a solid. The impurity oxides, on the other hand, at this acid concentration remain substantially dissolved in the acid, so that the subsequent solid/liquid separation process separates high purity ACH from the impure solution. However, if the concentration of the acid is raised much beyond approximately 30—35%, impurities present in the raw material will also precipitate out with the ACH in significant quantities.

The acid conversion reaction is normally operated in the temperature range of 40—120°C in a closed vessel. The closed vessel prevents escape of any gaseous chloride materials and facilitates the recovery and recycle of the HCl and water. The reaction is conducted under nominally ambient pressure conditions, but during the course of the reaction there will be a small pressure increase within the closed vessel due to the vapor pressures of evolved hydrogen chloride and water. The preferred temperatures for the operation of the process are usually in the range of 70—80°C, but that preferred range can vary depending on the particular materials from which the reaction vessel is constructed, due to differing degrees of resistance to the corrosive attack of the hot concentrated acid. The initial percent solids in the reaction mixture is in the range of 5—40% (by weight). The preferred range is 10—20%. At the end of the reaction, the slurry has a solids content in the range of 12—60% with the preferred value being between 25—50%.

The degree of purity to be achieved in the product alumina will be determined in part by the degree of conversion of the hydrated alumina to ACH in the acid solution. The highest degree of purity, in which the soda, silica and other impurities are normally less than 0.01%, often less than 50 ppm, in the product alumina will be obtained when the acid reaction is run to complete conversion of hydrated alumina to ACH. All the impurities will have been dissolved into the acid with complete dissolution of the hydrated alumina and the amount of impurities precipitating with the ACH will be minimized. The degree of alumina purification will also be dependent on the treatment of HCl recycle, if, as is economically desirable, the HCl-containing liquid is recycled back to the conversion from the solid/liquid separation step described below. If the recycle stream containing the dissolved impurities were not treated, the impurity level in the product would eventually build up to the level of the impure raw materials. Therefore, at least a portion (usually 25—50%) of the recycle stream is withdrawn and either disposed of as waste or, preferably, treated to separate the impurities from the HCl and water. The purified HCl/water fraction is then returned with the other (untreated) portion of the recycle stream to the conversion process to maximize the utilization of HCl.

Further purification, if required for some applications, can be accomplished by redissolution and resolidification of the ACH. This can be accomplished by dissolving in a suitable medium, i.e., water or dilute or concentrated hydrochloric acid, followed by resolidification by hydrochloric acid addition or gas sparging with HCl. In this way $Na_2O$ content can be reduced to as low as 0.002—0.003%.

For some applications, however, alumina needs to be purified but not necessarily to the maximum degree. It is possible with the present process to produce alumina of different degrees of purification simply by varying the degree of conversion to ACH in the acid solution, usually along with varying of the degree of purification of the recycle fraction or the volume of that fraction. If the reaction is halted at some point before complete conversion of the hydrated alumina to ACH and the solids present are separated and recovered, it will be found that the solid product is a mixture of unconverted hydrated alumina and high purity ACH. When this mixture is subjected to calcination as described below, the final alumina product will be found to contain some fraction of those residual impurities which were present in the unreacted portion of the hydrated alumina. The resultant impurity level in the product has been found not to be directly proportional to the degree of conversion, however. Surprisingly, the impurity level in material produced by this conversion process is in general found to be below that expected based on a simple averaging of the mixed solids. For example, 54% conversion by this process of a sample of $Al_2O_3{\cdot}3H_2O$ containing 0.3% $Na_2O$ gives a product $Al_2O_3$ having 0.09% $Na_2O$ instead of the expected 0.24% $Na_2O$. It is known there are different applications for aluminas containing a range of impurities (for instance, from 0.15% to 0.005% of soda) and it is a simple matter with the present process to determine the optimum time/temperature relationship to obtain the proper amount of conversion of Bayer ATH to obtain each of these products. The actual impurity level for any desired product will be a matter of routine experimentation for one skilled in the art. As an example, a reaction run to 24% conversion of gibbsite to $AlCl_3{\cdot}6H_2O$ carried out at 45°C for 30 minutes at a final acid concentration of 30% HCl yielded alumina with 0.12% $Na_2O$. A similar experiment run for 60 minutes gave 100% conversion at 90°C and a soda level below 0.006%.

Normally it will be found that complete conversion of hydrated alumina to ACH within the temperature ranges stated above, will occur in a time on the order of 40 to 150 minutes. Lesser degrees of conversion of the hydrated alumina will, of course, require proportionately less time at equivalent temperatures. Similarly, variations in temperature will have an inverse effect on reaction time.

In the description below regarding the calcination to produce the product alumina, it will be assumed for brevity that the conversion to ACH is complete. It will be understood, however, that all references to ACH below will also be equally applicable to mixtures of ACH and unreacted hydrated alumina in those instances where the operator has elected to run the reaction to a point less than full conversion.

Following completion of the acid reaction, the precipitated ACH is separated from the acid solution by conventional solid/liquid separation techniques. It is thereafter washed at least once (preferably several

times) with highly concentrated HCl solutions to remove remaining traces of the reaction liquor containing dissolved impurities. The washing step is an integral part of impurity removal for it eliminates impurities carried with the ACH by adsorption or co-precipitation, and also removes the traces of impure process liquor adhering to the solid ACH surfaces. For example, when 50 g $AlCl_3 \cdot 6H_2O$ containing 0.04% $Na_2O$ was washed with 100 ml of concentrated hydrochloric acid, the clean solid contained only 0.002% $Na_2O$. Washing with water or diluted acid is to be avoided, since the ACH will dissolve in such liquids. For that reason it is also desirable to keep the concentration of the wash acid from 25 to 35% HCl (preferably 30—35%) to minimize any redissolution of the ACH particles.

The liquor recovered in the solid/liquid separation step is recycled to the reaction step of the process. As described above, a fraction (usually about 25—50%) is purified to control impurity levels in the system.

The calcination of solid ACH or mixtures of partially converted hydrated alumina and ACH may be accomplished in rotary kilns, flash calciners or fluidized bed calciners. In one variation of this process a concentrated aqueous solution of ACH can be decomposed in a spray roaster to produce a form of alumina and regenerate water and hydrochloric acid.

The temperature at which the decomposition occurs determines the nature of the aluminous product. Decomposition occurs over the range 150°C to 1400°C. Decomposition at temperatures below 700°C generates an amorphous solid having a composition dependent on the calcining temperature. The major components expressed as $Al_2O_3$ and chloride expressed as Cl are present in the following amounts at 400°C (5—8% Cl and 91—95% $Al_2O_3$) and at 700°C (3—5% Cl and 94—97% $Al_2O_3$). In the range of 700—800°C the calcination yields one or more transition alumina phases having less than 0.5% residual chloride. At 800°C the calcination product is 100% one or more transition alumina phases with 0.25% Cl content. Between 800°C and 1200°C the relative proportions of the transition alumina phases and alpha alumina depends on the conditions of preparation. Above 1350°C the product of calcination is 100% $\alpha$ —$Al_2O_3$.

The calcination is preferably performed in two stages. In the first stage, preferably conducted at 400°C to 800°C for a period of 15 to 100 minutes, the HCl and water contents are reduced by 90—99%. In the second stage, preferably conducted at 800°C to 1350°C for 10 to 100 minutes, the HCl and water contents are further reduced by 98—99.99%. As will be recognized by those skilled in the art, these ranges of time and temperature may be varied somewhat, depending on the materials involved, particle size and similar factors. The precise conditions which are optimum for each stage will be a matter of routine determination.

The calcination step surprisingly provides additional reduction in levels of $Na_2O$ in the alumina product. Calcination of the fully or partially converted product from solid/liquid separation in the range 750—1350°C results in some elimination of sodium, probably in the form of sodium chloride or sodium aluminum chloride. Thus, ACH containing 0.06% $Na_2O$ calcined at 1000°C yielded alumina having only 0.02% $Na_2O$. This is only 6.7% of the expected $Na_2O$ based on soda present in the original ACH.

The HCl and water recovered from calcination can be, and preferably are, recycled to the conversion step. Since they contain few impurities they need not be treated as is all or a portion of the other recycle stream described above.

The following examples, which are intended to be exemplary only and not limiting, will illustrate the process of this invention.

Examples 1—10

Typical conversion reactions used 700 ml of 35% hydrochloric acid and 161 gm $Al_2O_3 \cdot 3H_2O$ (with 6% free moisture). The HCl consumed by the reaction was made up by bubbling hydrogen chloride gas through the mixture. The crystalline product was recovered by filtration and the product washed with 1 to 5 volumes of 35% hydrochloric acid. Material prepared was calcined at 1000°C and analyzed for impurities. Analyses, recovery, percent conversion and reaction conditions for a range of experiments are given in Table 2.

Example 11

A 450 gm sample of $AlCl_3 \cdot 6H_2O$ prepared from

TABLE 2

| Exp. No. | Temp, °C | Time, Min. | Final HCl Conc., % | Conv. % | Recovery of Alumina*, % | Impurities in Product Alumina, %: Soda | Ferric Oxide | Silica | Lime |
|---|---|---|---|---|---|---|---|---|---|
| 1 | -- | -- | -- | 0 | -- | 0.45 | 0.20 | 0.06 | 0.02 |
| 2 | 45 | 30 | 30 | 24 | 95 | 0.12 | 0.06 | 0.02 | 0.01 |
| 3 | 45 | 60 | 30 | 42 | 95 | 0.1 | 0.03 | 0.02 | 0.008 |
| 4 | 70 | 15 | 30 | 54 | 90 | 0.09 | 0.002 | 0.02 | 0.005 |
| 5 | 70 | 30 | 30 | 70 | 90 | 0.08 | 0.005 | 0.03 | 0.005 |
| 6 | 70 | 120 | 28 | 100 | 95 | 0.004 | 0.003 | 0.007 | 0.002 |
| 7 | 90 | 60 | 29 | 100 | 95 | 0.006 | 0.004 | 0.006 | 0.002 |
| 8 | 90 | 50 | 25 | 100 | 95 | 0.005 | 0.003 | 0.005 | 0.001 |
| 9 | 105 | 1440 | 10 | 94 | 0 | -- | -- | -- | -- |
| 10 | 110 | 60 | 14 | 80 | 70 | 0.006 | 0.004 | 0.01 | 0.008 |

*As ACH or unreacted hydrated alumina

gibbsite by reaction with hydrochloric acid, followed by washing with 200 ml of 35% hydrochloric acid, yielded alumina having 0.04% $Na_2O$ after calcination at 1000°C. Washing 50 gm of the $AlCl_3 \cdot 6H_2O$ with 100 ml of 35% hydrochloric acid gave a material which contained 0.002% $Na_2O$ after calcination at 1000°C.

Example 12

A 185 g sample of $AlCl_3 \cdot 6H_2O$ produced by this process, and containing 0.06 ± 0.01% $Na_2O$ was calcined at 1000°C for one hour. At the end of that time the alumina product weighed 29.9 gm and contained 0.02 ± 0.01% $Na_2O$. If all the soda contained in the $AlCl_3 \cdot 6H_2O$ remained in the alumina the concentration would be expected to be 0.30 ± 0.05% $Na_2O$.

Example 13

A 100 gm sample of $AlCl_3 \cdot 6H_2O$ (100 g) containing 0.04% $Na_2O$ was recrystallized from water (100 ml) by an HCl gas sparging method. The product (95 g) contained 0.005% $Na_2O$.

Statement of Industrial Application

The invention herein is applicable to those industrial processes and products which require high purity alumina in their composition or for specific reactions. It is most immediately applicable to the ceramics industry and will provide alumina of different specified degrees of purity for various ceramic products, including electronic parts, insulators, catalyst supports, adsorbents, translucent bodies and synthetic sapphire.

**Claims**

1. A process for the reduction of the impurity content in alumina produced from a solid hydrated alumina containing a significant impurity content, which comprises:

a. a reacting said solid hydrated alumina with 15—35% by weight hydrochloric acid to convert at least a portion of said hydrated alumina to solid aluminium chloride hexahydrate and to dissolve at least a portion of said impurities in said acid;

b. recovering said solid aluminum chloride hexahydrate and any unreacted solid hydrated alumina from said acid containing said dissolved impurities; and

c. calcining the solid materials so recovered to separate HCl and water and form substantially anhydrous amorphous or crystalline alumina having a lower impurity content than said hydrated alumina.

2. A process as in claim 1 wherein said acid remaining after step (b) is recycled for reuse back to step (a).

3. A process as in claim 2, wherein at least a portion of said recycled acid is treated to remove said dissolved impurities therefrom prior to said portion being returned to step (a).

4. A process as in claim 3, wherein said portion comprises 25—50% of the recycled hydrochloric acid.

5. A process as in claims 1, 2, 3 or 4 further comprising redissolving said solid materials after recovery in step (b) and then resolidifying said dissolved materials and recovering said resolidified materials for calcining.

6. A process as in claim 5 wherein said redissolution and resolidification is performed at least twice, and solidified material is recovered after each repetition to be used in the next repetition.

7. A process as in any of claim 5 and 6 wherein said resolidification is by means of evaporative or gas sparging recrystallization with HCl or by addition of hydrochloric acid.

8. A process as in any of claims 1 to 5, wherein said calcining is accomplished in at least two stages.

9. A process as in claim 8 wherein the first stage of said calcination is conducted so as to remove up to 99 weight percent of included HCl and water, and the second stage is conducted so as to increase the degree of removal of included HCl and water up to as much as 99.99 weight percent.

10. A process as in any of claim 8 and 9 wherein the recovered hydroxychloric acid (HCl) from calcination is recycled to step (a).

11. A process as in any of claims 1 to 5 wherein said acid has a concentration in the range of 20—30% HCl.

12. A process as in claim 7 wherein said acid concentration is in the range of 15—35%.

13. A process as in claim 12 wherein said acid concentration is in the range of 20—30%.

14. A process as in claim 10, wherein said acid concentration in the range of 15—35% HCl.

15. A process as in any of claims 1 to 4 wherein said hydrated alumina has a soda content greater than 0.25 weight percent and the alumina product has a soda content of not more than 0.15 weight percent.

16. A process as in claim 15 wherein the said soda content of said alumina product is more than 0.1 weight percent.

17. A process as in claim 16 wherein the soda content of said alumina product is not more than 0.01 weight percent.

18. A process as in any of claims 1 to 4, wherein the step a) all of the hydrated alumina is converted to aluminum chloride hexahydrate.

**Patentansprüche**

1. Ein Verfahren zur Verringerung des Gehaltes an Verunreinigungen in Aluminiumoxid, das aus einem festen hydratisierten Aluminiumoxid mit einem beachtlichen Gehalt an Verunreinigungen erhalten worden ist, welches umfaßt

a) die Umsetzung des festen, hydratisierten Aluminiumoxides mit 15 bis 35 Gew.% Salzsäure, um mindestens einen Teil des hydratisierten Aluminiumoxids in festes Aluminiumchlorid-Hexahydrat umzuwandeln und um mindestens einen Teil der Verunreinigungen in dieser Säure aufzulösen,

b) Isolierung des festen Aluminiumchlorid-Hexahydrats und jedwedem vorhandenen nicht umgesetztem fester hydratisierten Aluminiumoxid aus der die gelösten Verunreinigungen enthaltenden Säure und

c) Calcinierung des derart isolierten festen Materials zur Abtrennung von HCl und Wasser unter Bildung eines im wesentlichen wasserfreien amorphen oder kristallinen Aluminiumoxids mit einem gegenüber dem hydratisierten Aluminiumoxid niedrigeren Gehalts an Verunreinigungen.

2. Verfahren nach Anspruch 1, wobei die nach dem Verfahrensschritt b) verbleibende Säure zur erneuten Verwendung wieder in die Verfahrensstufe (a) rückgeführt wird.

3. Verfahren nach Anspruch 2, wobei mindestens ein Teil der rückgeführten Säure zur Entfernung der darin gelösten Verunreinigungen behandelt wird, bevor man diesen Teil wieder in die Verfahrensstufe (a) einführt.

4. Verfahren nach Anspruch 3, wobei der besagte Teil 25 bis 50% der rückgeführten Salzsäure ausmacht.

5. Verfahren nach Anspruch 1, 2, 3 oder 4, ferner umfassend eine Wiederauflösung des besagten festen Materials nach Isolierung in Verfahrensstufe (b) und eine anschließende Wiederverfestigung der gelösten Materialien und Isolierung besagter wiederverfestigten Materialien zum Calcinieren.

6. Verfahren nach Anspruch 5, wobei besagte Wiederauflösung und Wiederverfestigung wenigstens zweimal durchgeführt und das verfestigte Material nach jeder Wiederholung isoliert und für die nächste Wiederholung eingesetzt wird.

7. Verfahren nach jedem der Ansprüche 5 und 6, wobei die Wiederverfestigung durch Verdampfungskristallisation oder durch begasende Rekristallisation mit HCl oder durch Zugabe von Salzsäure erfolgt.

8. Verfahren nach jedem der Ansprüche 1 bis 5, wobei das Calcinieren in mindestens zwei Stufen durchgeführt wird.

9. Verfahren nach Anspruch 8, wobei die erste Stufe der Calcinierung so durchgeführt wird, daß bis zu 99 Gew.% an eingeschlossenem HCl und Wasser entfernt werden, und die zweite Stufe so durchgeführt wird, daß der Grad der Entfernung von eingeschlossenem HCl und Wasser bis zu 99,99 Gew.% erhöht wird.

10. Verfahren nach jedem der Ansprüche 8 und 9, wobei die bei der Calcinierung anfallende Chlorwasserstoffsäure (HCl) in die Verfahrensstufe (a) rückgeführt wird.

11. Verfahren nach jedem der Ansprüche 1 bis 5, bei dem die Säure eine Konzentration im Bereich von 20 bis 30% HCl hat.

12. Verfahren nach Anspruch 7, wobei die Säurekonzentration in einem Bereich von 15 bis 35% liegt.

13. Verfahren nach Anspruch 12, wobei die Säurekonzentration in einem Bereich von 20 bis 30% liegt.

14. Verfahren nach Anspruch 10, wobei die Säurekonzentration in einem Bereich von 15 bis 35% HCl liegt.

15. Verfahren nach jedem der Ansprüche 1 bis 4, wobei das besagte hydratisierte Aluminiumoxid einen Natriumoxidgehalt von über 0,25 Gew.% und das Aluminium-Produkt einen Natriumoxidgehalt von nicht mehr als 0,15 Gew.% hat.

16. Verfahren nach Anspruch 15, wobei der Natriumoxidgehalt des Aluminiumoxid-Produktes höher als 0,1 Gew.% ist.

17. Verfahren nach Anspruch 16, wobei der Natriumoxidgehalt des Aluminiumoxid-Produktes nicht höher als 0,01 Gew.% ist.

18. Verfahren nach jedem der Ansprüche 1 bis 4, wobei beim Verfahrensschritt (a) das gesamte hydratisierte Aluminiumoxid in Aluminium-Hexahydrat umgewandetlt wird.

**Revendications**

1. Procédé de réduction de la teneur en impuretés dans de l'alumine produite à partir d'une alumine solide hydratée, ayant une importante teneur en impuretés, dans lequel:

a. on fait réagir cette alumine solide hydratée, avec de l'acide chlorhydrique à 15 jusqu'à 35% en poids, pour convertir au moins une partie de cette alumine hydratée, en chlorure d'aluminium hexahydraté solide, et pour dissoudre au moins une partie de ces impuretés dans l'acide;

b. on récupère ce chlorure d'aluminium hexahydraté solide, et l'alumine hydratée solide n'ayant pas réagi, en les séparant de l'acide contenant les impuretés dissoutes; et

c. on calcine les matériaux solides ainsi récupérés, pour séparer HCl et l'eau, et former de l'alumine amorphe ou cristalline presque anhydre, ayant une teneur en impuretés inférieure à celle de l'alumine hydratée.

2. Procédé selon la revendication 1, dans lequel l'acide restant après l'étape (b), est recyclé en retour pour être réutilisé dans l'étape (a).

3. Procédé selon la revendication 2, dans lequel au moins une fraction de l'acide recyclé, est traitée pour éliminer de celle-ci, les impuretés dissoutes, avant de renvoyer cette fraction à l'étape (a).

4. Procédé selon la revendication 3, dans lequel la fraction représente de 25 à 50% de l'acide chlorhydrique recyclé.

5. Procédé selon la revendication 1, 2, 3 ou 4, dans lequel on redissout en outre les matériaux solides après la récupération dans l'étape (b), et on resolidifie ensuite ces matériaux dissous, et on récupère ces matériaux resolidifiés pour les calciner.

6. Procédé selon la revendication 5, dans lequel la redissolution et la resolidification, sont effectuées au moins deux fois, le matériau solidifié étant récupéré à chaque fois pour être utilisé la fois suivante.

7. Procédé selon l'une quelconque des revendications 5 et 6, dans lequel la resolidification, est effectuée par évaporation, ou recristallisation par barbotage d'HCl gazeux ou par addition d'acide chlorhydrique.

8. Procédé selon l'une quelconque des revendications 1 à 5, dans lequel la calcination est effectuée en au moins deux étapes.

9. Procédé selon la revendication 8, dans lequel la première étape de la calcination, est effectuée de façon éliminer jusqu'à 99 pour cent en poids de l'HCl et de l'eau contenus, et dans lequel la deuxième étape est effectuée de façon à accroître le degré d'élimination de l'HCl et de l'eau contenus, jusqu'à autant que 99,99 pour cent en poids.

10. Procédé selon l'une des revendications 8 à 9, dans lequel l'acide chlorhydrique (HCl) récupéré par calcination, est recyclé à l'étape (a).

11. Procédé selon l'une quelconque des revendications 1 à 5, dans lequel l'acide a une concentration de 20 à 30% en HCl.

12. Procédé selon la revendication 7, dans lequel la concentration en acide, est de 15 à 35%.

13. Procédé selon la revendication 12, dans lequel la concentration en acide, est de 20 à 30%.

14. Procédé selon la revendication 10, dans lequel la concentration en acide, est de 15 à 35% de HCl.

15. Procédé selon l'une quelconque des revendications 1 à 4, dans lequel l'alumine hydratée a une teneur en soude, supérieure à 0,25% en poids, et dans lequel l'alumine produite a une teneur en soude, qui n'est pas supérieure à 0,15% en poids.

16. Procédé selon la revendication 15, dans lequel la teneur en soude de l'alumine produite, est supérieure à 0,1% en poids.

17. Procédé selon la revendication 16, dans lequel la teneur en soude de l'alumine produite, n'est pas supérieure à 0,01% en poids.

18. Procédé selon l'une quelconque des revendications 1 à 4, dans lequel la totalité de l'alumine hydratée, est convertie en chlorure d'aluminium hexahydraté dans l'étape (a).